# EUROPEAN PATENT APPLICATION

(11) **EP 4 811 783 A1**
(43) Date of publication of application: **23.09.2026**
(21) Application number: 25305349.0
(22) Date of filing: 17.03.2025
(51) Int. Cl.: H04N 19/124, H04N 19/126, H04N 19/147, H04N 19/176

(54) **ON RELATION BETWEEN LAGRANGE MULTIPLIER AND QUANTIZATION STEP SIZE**

(71) Applicant: InterDigital CE Patent Holdings, SAS, 75017 Paris (FR)
(72) Inventor: BALCILAR, Muhammet, 35830 BETTON (FR); LE PENDU, Mikael, 35700 RENNES (FR); GALPIN, Franck, 35235 THORIGNE-FOUILLARD (FR); LE LEANNEC, Fabrice, 35830 BETTON (FR)
(74) Representative: Vossius & Partner Patentanwälte Rechtsanwälte mbB

(57) **Abstract**

In one implementation, a method of video encoding is provided, comprising: obtaining a first parameter indicative of a quantization step size corresponding to a quantization parameter of a block, said first parameter is an adjusted version of a second parameter indicative a different quantization step size corresponding to the quantization parameter of the block, wherein the second parameter is scaled to obtain the first parameter; quantizing transform coefficients based on the first parameter to form quantized transform coefficients; and entropy coding the quantized transform coefficients for the block.

## Description

### BACKGROUND

The present application is related to rate distortion optimization in video encoding and decoding.

### BRIEF SUMMARY

Briefly stated, in one embodiment, a method of video encoding is presented, comprising: obtaining a first parameter indicative of a quantization step size corresponding to a quantization parameter of a block, said first parameter is an adjusted version of a second parameter indicative a different quantization step size corresponding to the quantization parameter of the block, wherein the second parameter is scaled to obtain the first parameter; quantizing transform coefficients based on the first parameter to form quantized transform coefficients; and entropy coding the quantized transform coefficients for the block.

According to another embodiment, a method of video decoding is presented, comprising: obtaining a first parameter indicative of a quantization step size corresponding to a quantization parameter of a block, said first parameter is an adjusted version of a second parameter indicative a different quantization step size corresponding to the quantization parameter of the block, wherein the second parameter is scaled to obtain the first parameter; de-quantizing transform coefficients based on the first parameter to form de-quantized transform coefficients; inverse transforming de-quantized transform coefficients to obtain prediction residuals for the block; and decoding the block based on the prediction residuals for the block.

According to another embodiment, an apparatus for video encoding is presented, comprising one or more processors and at least one memory coupled to the one or more processors, wherein the one or more processors are configured to: obtain a first parameter indicative of a quantization step size corresponding to a quantization parameter of a block, said first parameter is an adjusted version of a second parameter indicative a different quantization step size corresponding to the quantization parameter of the block, wherein the second parameter is scaled to obtain the first parameter; quantize transform coefficients based on the first parameter to form quantized transform coefficients; and entropy code the quantized transform coefficients for the block.

According to another embodiment, an apparatus for video decoding is presented, comprising one or more processors and at least one memory coupled to the one or more processors, wherein the one or more processors are configured to: obtain a first parameter indicative of a quantization step size corresponding to a quantization parameter of a block, said first parameter is an adjusted version of a second parameter indicative a different quantization step size corresponding to the quantization parameter of the block, wherein the second parameter is scaled to obtain the first parameter; de-quantize transform coefficients based on the first parameter to form de-quantized transform coefficients; inverse transform de-quantized transform coefficients to obtain prediction residuals for the block; and decode the block based on the prediction residuals for the block.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder;
FIG. 3 is a block diagram illustrating an example video decoder;
FIG. 4 illustrates rate-distortion performance of ECM-16 and VTM-16 for BasketballDrill sequence for QP = 22, 27, 32, 37 in All Intra mode (AI);
FIG. 5 illustrates a method of encoding according to one or more embodiments of the present disclosure; and
FIG. 6 illustrates a method of decoding according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

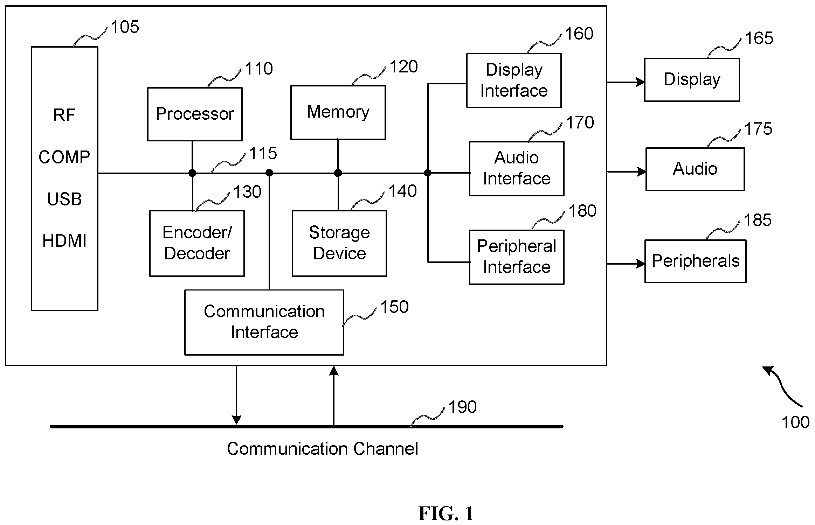

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

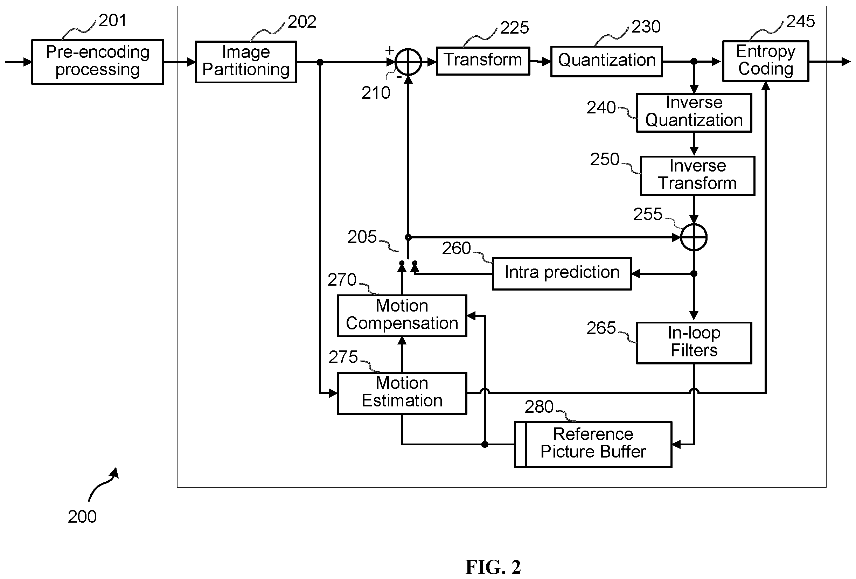

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

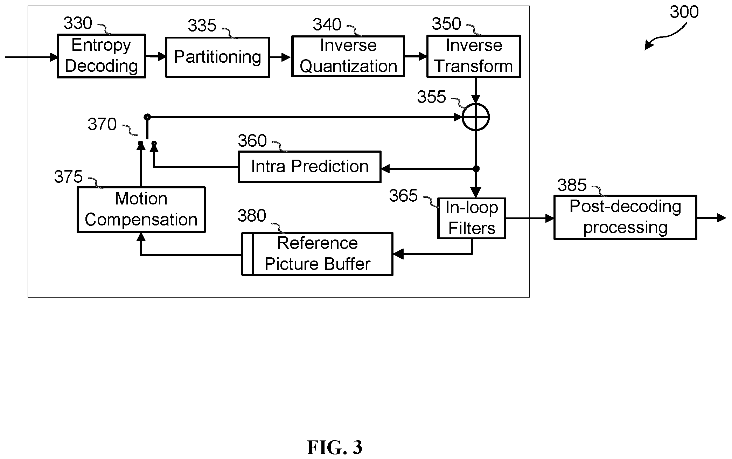

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g., by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (385) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

### Quantization in ECM

As described above, the prediction residuals are transformed and quantized. Considering an MxN (M columns x N rows) residual block ([U]_{MXN}) that is input to a 2D MxN forward transform, the 2D transform is typically implemented by applying an N-point transform to each column (i.e., vertical transform) and an M-point transform to each row (i.e., horizontal transform) separately. Mathematically, the forward transform can be expressed as: ${\left[C\right]}_{MxN} = {{\left[A\right]}^{T}}_{NxN} \times {\left[U\right]}_{MxN} \times {\left[B\right]}_{MxM}$ where [A]_{NxN} is the N-point transform matrix applied vertically, and [B]_{MxM} the M-point transform matrix applied horizontally, and "T" (superscript) is the matrix transposition operator. Thus, the separable transform consists in applying the horizontal and vertical transforms successively on each row and each column of the 2D residual block.

The resulting MxN transform coefficients ([C]_{MXN}) are then subject to quantization to obtain quantized transform coefficients ([CQ]_{MXN}). In ECM, Uniform Reconstruction Quantization (URQ) is used for quantization, which is conceptually equivalent to division by quantization step size (Qstep). More generally for video encoding, it should be noted that other quantization methods may be used, for example, by further considering a quantization rounding offset, using non-uniform quantization or dependent quantization (DQ) which is based on Rate Distortion search by Trellis Coded Quantization (TCQ).

To quantize the transform coefficients, in ECM, the encoder can specify, for each transform block size and separately for intra and inter prediction, a customized quantization (scaling) matrix (QM) for use in inverse-quantization scaling by the decoder. The quantization matrix is typically designed to provide more accuracy to coefficients corresponding to frequencies more sensitive to human perception. The goal is to adapt the quantization of the transform coefficients to improve the perceptual quality of the coded video, typically by taking into account the properties of the human visual system to different spatial frequencies of the signal. For example, low frequencies are less quantized than the high frequencies.

The quantization at the encoder side is not normative and can be done in different ways. Nevertheless, it typically reproduces or approximates the following formula for an ECM encoder: $CQ \left[x\right] \left[y\right] = sign \left(C\left[x\right]\left[y\right]\right) * \left(\begin{matrix}abs \left(C\left[x\right]\left[y\right]\right) * Scale \left[sqrt2adj\right] \left[QP % 6\right] / QM \left[x\right] \left[y\right] + \\ quantOffset\end{matrix}\right) ≫ quantShift$ where
- CQ is the block of quantized coefficients,
- C is the block of transform coefficients,
- QM is the quantization matrix,
- Scale[0][k] = {26214, 23302, 20560, 18396, 16384, 14564} with k = 0, ..., 5, defines the quantization scale,
- Scale[1][k] = {18396, 16384, 14564, 13107, 11651, 10280} with k = 0, ..., 5, defines quantization scale divided by sqrt(2),
- QP is the quantization parameter,
- sqrt2adj is a binary value that indicates if Scale needs to be divided by the square root of 2,
- quantShift is a parameter that depends on the scaling involved by the forward transform applied at the encoder, on the transform block size, on the signal bit depth, and on QP.
   o In the ECM reference encoder, quantShift = 14 + QP + TransformShift, where TransformShift relates to the scaling involved by the forward transform,
- quantOffset is a parameter that depends on parameter quantShift, for instance, quantOffset = 1 << (quantShift - 1),
- (x, y) is the location of the coefficient,
- abs(r) is the absolute value of r,
- sign(r) = -1 if r < 0, 1 otherwise,
- "*" is the scalar multiplication, "/" is the integer division with truncation of the result toward zero, and "%" is the modulus operator.

At the decoder side, the QM can be applied in the de-quantization conforming to the ECM specification based on the following formula: $C ′ \left[x\right] \left[y\right] = \left(CQ\left[x\right]\left[y\right]*QM\left[x\right]\left[y\right]*\right.$ $invScale \left[sqrt2adj\right] \left[QP%6\right] ≪ \left.\left(QP/6\right)\right) + \left.\left(1≪\left(bdShift-1\right)\right)\right) ≫ bdShift$ where
- CQ is the block of quantized coefficients,
- C' is the block of de-quantized coefficients,
- QM is the quantization matrix,
- invScale[0][k] = {40, 45, 51, 57, 64, 72} with k = 0, ..., 5. The multiplication by invScale[QP%6] and left shift by (QP/6) is the equivalent of the multiplication by quantization step size qStep = ( invScale[QP%6] << (QP/6)),
- invScale[1][k] = {57, 64, 72, 80, 90, 102} with k = 0, ..., 5, defines quantization step size multiplied by sqrt(2),
- QP is the quantization parameter,
- sqrt2adj is a binary value that indicates if the quantization step size needs to be multiplied by the square root of 2,
- bdShift is defined as follows for ECM: bdShift = Max(20 - bitDepth, 0), bitDepth is the bit depth of the samples of the considered component (e.g., Y, Cb or Cr),
- (x, y) is the location of the coefficient.

Here, the encoder side quantization scale (Scale[sqrt2adj][k]) and decoder side inverse quantization scale (invScale[sqrt2adj][k]) are the inverse of each other. In the encoder side, instead of dividing a transform coefficient by the quantization step size directly, it is implemented by multiplying the transform coefficient by a quantization scale. One of the reasons behind that is not to use high complex division operation. In previous work, the relation is defined by invScale = 2²⁰/Scale. Since both Scale and invScale are integer, to not to lose precision, 2²⁰ constant is used. That also means that if one of Scale or invScale is modified, another should be modified where the relationship invScale = 2²⁰/Scale still meets.

### Lagrange Multiplier and Quantization Step Size

In many multi-objective optimization problems, the trade-off between objectives is controlled by Lagrange Multiplier known as a lambda parameter. In case of video codecs, the encoder finds the minimum unified cost where the objectives are Rate (R) and Distortion (D). Thus, the unified cost function can be written as: $Cost = D + λR ,$ where *λ* is the Lagrange Multiplier that determines how the Rate objective is important (or equivalently how Distortion objective is unimportant) in reconstructed image/video. The greater the *λ* value is, the greater importance is the Rate objective, thus the lower the rate and the greater the distortion in reconstructed video/image. The *λ* value is not determined freely. Instead, it is the function of a free parameter QP (Quantization Parameter) that is to be determined by user. In the ECM design, *λ* value is doubled every 3 increments on QP. Thus, it can be written as: $λ = a {.2}^{QP / 3} ,$ where the scalar multiplier *a* depends on the encoded channel, encoding mode and bit depth.

The quantization step size (denoted by Δ) determines the reconstruction points in dequantization process. When Uniform Reconstruction Quantization (URQ) is used, each coefficient should have a value of *i*Δ where *i* is the integer quantization index such that *i =* ···, -2, -1,0,1,2, .... When DQ is used, coefficients should have a value of (2 ** i -* 1)Δ or (2 * *i*)Δ depending on whether the state id in TCQ is odd or even, respectively. A greater Δ value makes the reconstruction points sparser, thus increases the quantization error. A smaller Δ value makes the reconstruction points denser, thus decreases the quantization error. Selection of the Δ value is determined by user defined free parameter QP. In the ECM design, Δ value is doubled every 6 increments on QP. Thus, it can be written as: $Δ = b {.2}^{QP / 6} ,$ where the scalar multiplier *b* depends on bit depth and encoded block size.

Since the distortion is defined by quantization error that can be written by proportional to the square of quantization step size, distortion can be written as a function of Δ with a constant multiplier c as follows: $D \left(Δ\right) \approx c . {Δ}^{2} .$

On the other hand, Rate is highly proportional to log of the quantization index in high-rate approximation. When we assume the quantization index of transform coefficient t is *i ≈ t*/Δ in scalar quantization, the rate can be written with a constant multiplier d as follows: $R \left(Δ\right) \approx d . {log}_{2} \left(\frac{t}{Δ}\right) .$

According to optimality conditions on the multi-objective optimization problem, the *λ* value is set to the negative slope of RD curve that is written as: $λ \approx - \frac{\partial D \left(Δ\right)}{\partial R \left(Δ\right)} = - \frac{2 c Δ}{- \left(\frac{d}{ln \left(2\right) Δ}\right)} = β . {Δ}^{2}$ where constant scalar value *β* = 2cln (2)/*d*. The above theoretical analysis shows that the *λ* value should be proportional to the Δ². When we replace Δ in Eq. (8) by its definition in Eq. (5), we end up with $λ = β {\left(b{.2}^{\frac{QP}{6}}\right)}^{2}$ which is the same as Eq. (4) when *a* = *β.b*²*.* That is the reason why the lambda and quantization step size are selected in Eq. (4) and Eq. (5) in most existing codecs, respectively (see an article by Thomas Wiegand et al., entitled "Lagrange multiplier selection in hybrid video coder control," in Proceedings 2001 International Conference on Image Processing, IEEE, 2001, pages 542-545).

The lambda parameter and the quantization step size play a crucial role in RD performance of video codec. The wrong values change the slope of RD curve and make the RD minimization suboptimal. Thus, the multipliers of these values (*a* and b in Eq. (4) and Eq. (5)) need to be fine-tuned for the current codec. So far, the ECM codec uses the values inherited from the previous generation standard (VVC) and these values result suboptimality in current codec.

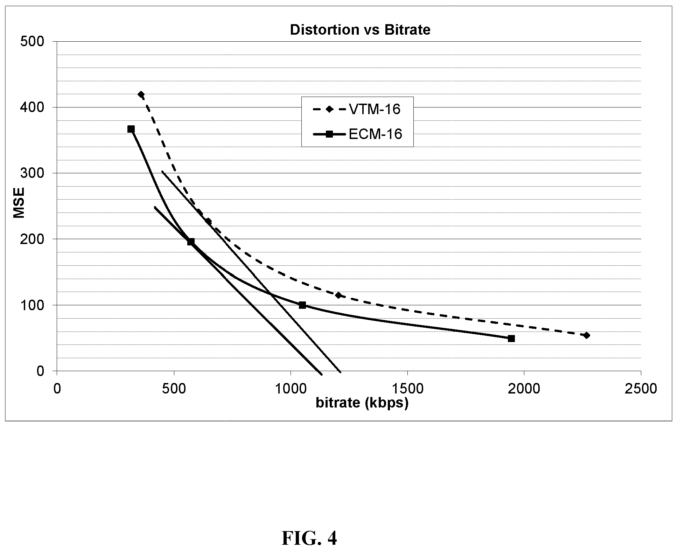

According to our extensive tests, we have observed that the current lambda parameter and quantization step size are not fine-tuned for the current video codec. FIG. 4 illustrates a single test sequence result of the current state-of-the-art codec (ECM-16) compared to the VVC reference software result (VTM-16). As can be seen, ECM-16 gives lower distortion and thus better RD performance. However, the slopes of the RD curves are not the same for a given QP value (e.g., QP = 27). Since the slopes are not the same, it is not appropriate to use the same lambda value for both VTM-16 and ECM-16. Thus, we propose to adjust the lambda value and the quantization step size to reach better coding performance. We derived a theoretical relationship between changes on the quantization step size and the lambda parameter to maintain a similar rate.

In one embodiment, we propose to tune both the lambda value and quantization step size simultaneously to get a similar rate at a given QP but better reconstruction image. Since these two parameters affect the rate in a same way (decreasing lambda or quantization step size increases rate, increasing lambda or quantization step size decreases rate). To get a similar rate, the adjustment on these parameters should be in a different way (one increases while another decreases). Here we develop a theory on how these modifications can be done while maintaining a similar rate for a given QP.

The relation between the quantization step size and rate is given in Eq. (7). According to this relation, the changes on quantization step size affects rate by its derivative given in following equation: $\frac{\partial R}{\partial Δ} = - \frac{d}{Δ . ln \left(2\right)}$

To find the effect on changing lambda to rate, first we find the relation between lambda and rate. Using Eq. (4) and Eq. (5) we can find the relation in following equation: $Δ = b \sqrt{λ / a}$

Thus, the relation between rate and lambda can be written by replacing Δ in Eq. (7) by its relation to lambda in Eq. (10) by the following: $R \left(λ\right) \approx d . {log}_{2} \left(\frac{t}{b \sqrt{λ / a}}\right)$

The effect on changing lambda to rate is obtained by taking derivative of Eq. (11) in following equation: $\frac{\partial R}{\partial λ} = - \frac{d}{2 . λ . ln \left(2\right)}$

Using Eq. (9), when Δ changes by *d*_{Δ}*.* Δ step size (Δ - Δ + *d*_{Δ}Δ), the rate changes by $- \frac{d . {d}_{Δ} Δ}{Δ . ln \left(2\right)}$. Using Eq. (12), when *λ* changes by *d_{λ}.λ* step size (*λ* - *λ* + *d_{λ}.λ*), the rate changes by $- \frac{d . {d}_{λ} . λ}{2 . λ . ln \left(2\right)}$. To maintain a similar rate at a given QP (not to change the rate while fine-tuning lambda and quantization step size) we expect the sum of the changes on rate by lambda and quantization step size modifications cancel each other by the followings: $- \frac{d . {d}_{Δ} . Δ}{Δ . ln \left(2\right)} - \frac{d . {d}_{λ} . λ}{2 . λ . ln \left(2\right)} = 0$

Eq. (13) is simplified to *d*_{Δ} = -*d_{λ}*/2 which is the final relationship between the relative modification of step size (*d*_{Δ}) and relative modification of lambda (*d_{λ}*). This final equation indicates that if the quantization step size is increased by some percentage, the lambda value should be decreased by double of that percentage to maintain a similar rate at a given QP or vice versa.

In the following, we describe several embodiments on how to modify lambda and the quantization step size in the video codec.

### First embodiment

In the first embodiment, we multiply the quantization step size (inverse quantization scale shown by invScale) and divide the quantization scales shown by Scale (which can be called as inverse quantization step size) with an adjustment coefficient (1 + *σ*) and multiply the lambda value with another adjustment coefficient (1 - *γ*) where -1 ≤ *γ, σ* ≤ 1 and *γ* = 2*σ* as described in the above for the developed theory. In another words, if we consider (1 + *σ*) as a first scaling factor S1 and (1 - *γ*) as the second scaling factor S2, because *γ* = 1 - *S*2, and *σ* = *S*1 - 1, we have 1 - *S*2 = 2(*S*1 - 1).

The adjustment of the lambda parameter can be done on the fly by a single multiplication of base lambda value such that: $λ ′ = \left(1-γ\right) λ$

This can be implemented by a single multiplication of base lambda value in the reference software as the follows:

```
       /* base lambda calculation */
       double dLambda = initializeLambda (slice, GOPid, int (refQP + 0.5), dQP);
       /* our lambda adjustment */
       dLambda *= (1- γ);
```

The adjustment of the quantization step size can be done in different ways. One is to apply these adjustments on the fly that is to multiply invScale (quantization step size) and divide Scale (inverse quantization step size) by the adjustment coefficient such that: $\begin{matrix}CQ \left[x\right] \left[y\right] = sign \left(C\left[x\right]\left[y\right]\right) * \left(abs\left(C\left[x\right]\left[y\right]\right)*\left(1/\left(1+σ\right.\right)\right) * Scale \left[sqrt2adj\right] \left[QP % 6\right] / QM \left[x\right] \left[y\right] + \\ \left.quantOffset\right) ≫ quantShift\end{matrix}$ $C ′ \left[x\right] \left[y\right] = \left(\begin{matrix}CQ \left[x\right] \left[y\right] * QM \left[x\right] \left[y\right] * \left(1+σ\right) * \\ invScale \left[sqrt2adj\right] \left[QP%6\right] ≪ \left(QP/6\right)\end{matrix}\right) \left.+\left(1≪\left(bdShift-1\right)\right)\right) ≫ bdShift$

Another way to implement adjustment on quantization step size is to pre-compute new Scale and InvScale and hard-coded new quantization step size in the reference software as follows. Note that when the quantization step size is adjusted, the decoder needs to be adjusted to use the corresponding new inverse quantization step size. The lines between "#if IDCC_GRID_SIZE" and "#else" (or "#if IDCC_LAMBDA" and "#endif") are the new values and those between "#else" and "#endif" are those in the current ECM. Note that g_quantScales corresponds to Scale in Eq. (1) and g_quantScales corresponds to invScale in Eq. (2).

```
       const int g_quantScales[ 2 ][ SCALING_LIST_REM_NUM ] =
       {
       #if IDCC_GRID_SIZE
          { 25575, 22795, 20165, 17772, 15888, 14170},
          { 17772, 15888, 14170, 12788, 11275, 9986 }
       #else
          { 26214, 23302, 20560, 18396, 16384, 14564 },
          { 18396, 16384, 14564, 13107, 11651, 10280 }
       #endif
       };
       const int g_invQuantScales[ 2 ][ SCALING_LIST_REM_NUM ] =
       {
       #if IDCC_GRID_SIZE
          { 41, 46, 52, 59, 66, 74 },
          { 59, 66, 74, 82, 93, 105 }
       #else
          { 40, 45, 51, 57, 64, 72 },
          { 57, 64, 72, 80, 90, 102 }
       #endif
       };
```

We may test different values for *γ* and select the one with the best performance. In one example, we select *γ* = 1 - 2^{-0.1/3}, and the implementation of this adjustment in the reference software is as follows:

```
       /* base lambda calculation */
       double dLambda = initializeLambda (slice, GOPid, int (refQP + 0.5), dQP);
       #if IDCC_LAMBDA
           double tmp = pow( 2.0, -0.1/3.0 );
           dLambda *= tmp;
       #endif
```

We may select *γ* differently. For example, it can be a function of one of the followings or their combination: QP, encoding mode (all intra, random access or low delay), encoded block size, channel type (Luma or Chrome) or slice type. We may show this relation as follows: $γ = f \left(QP, mode, blocksize, channel, slice\right)$ where *f*() can be any function that includes linear and any kind of non-linear functions.

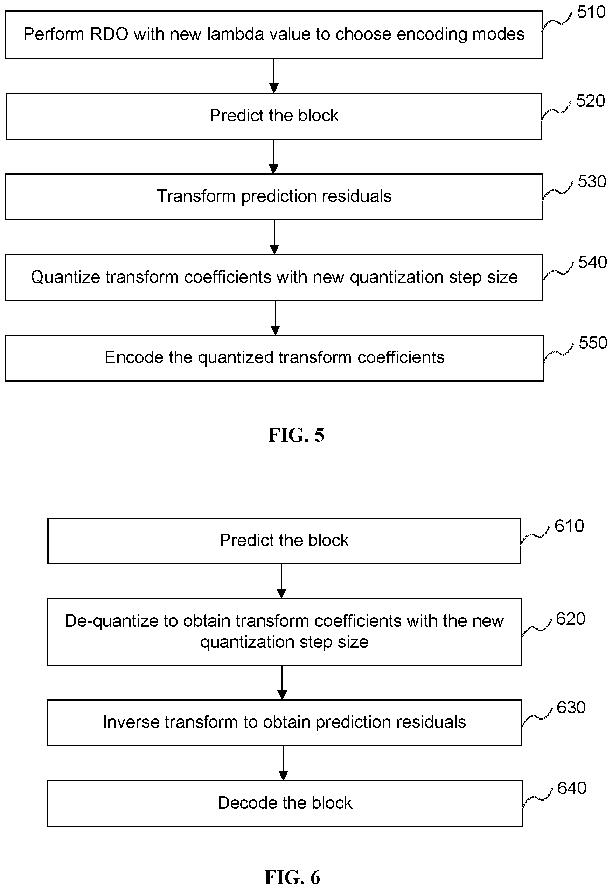

FIG. 5 illustrates a method of encoding with both lambda value and quantization step size adjustments, according to one embodiment. The encoder performs (510) rate-distortion optimization with the new lambda value to choose the best encoding modes for a current block, e.g., inter vs. intra, the directional intra mode if intra mode is used, AMVP vs. merge if inter mode is used. As described above, the new lambda value can be obtained by scaling the lambda value, for example, used in ECM or VVC. The block is then predicted (520) with the selected encoding modes and the prediction residuals are transformed (530). The transform coefficients are then quantized (540) with the new quantization step size. As described above, g_invQuantScales left shifted by QP<<6 indicates the quantization step size corresponding to the quantization parameter (QP) of the block. To use the new quantization step size, g_invQuantScales is adjusted by a scaling factor and the adjusted g_invQuantScales left shifted by QP<<6 indicates the new quantization step size corresponding to the quantization parameter (QP) of the block, and g_quantScales is adjusted accordingly to be used for quantization. The quantized transform coefficients are then entropy coded (550).

FIG. 6 illustrates a method of decoding with both lambda value and quantization step size adjustments, according to one embodiment. Given the prediction modes decoded from the bitstream, a block is predicted (610). The decoder also performs de-quantization (620) with the new quantization step size to obtain transform coefficients for the current block. As described above, g_invQuantScales left shifted by QP<<6 indicates a quantization step size corresponding to the quantization parameter (QP) of the block. To use the new quantization step size, g_invQuantScales is adjusted by a scaling factor and the adjusted g_quantScales left shifted by QP<<6 indicates the new quantization step size corresponding to the quantization parameter (QP) of the block. Then inverse transform (630) is performed to obtain the prediction residuals. Given the predicted block and prediction residuals, the block can be decoded (640).

### Second embodiment

When the rate increase or decrease for a given QP is acceptable, we do not need to change the quantization step size. Thus, just direct lambda modification can be enough to determine the negative slope of RD curve accurately. In this embodiment, we just modified the lambda value to make RD minimization optimal, namely, set the lambda value to the negative slope of the RD curve. In our test, we have seen that additional lambda correction should be function of given user defined QP parameter as follows. The function can be any function of defined QP. In this example we have chosen 2^{(*QP*-37)/90} as an adjustment factor. Thus, the relation between the base lambda value and the adjusted lambda value can be as follows: $λ ′ = λ {.2}^{\left(QP-37\right) / 90}$

Note while *λ* value is doubled for every 3 increments on QP, *λ*' no longer doubles for every 3 increments of QP. More generally, *λ*' can be other functions of QP that may or may not double for every 3 increments of QP. This can be implemented by the following pseudo-code.

```
       /* base lambda calculation */
       double dLambda = initializeLambda (slice, GOPid, int (refQP + 0.5), dQP);
       #if IDCC_LAMBDA
           double tmp = pow(2.0, (QP-37.0)/90);
           dLambda *= tmp;
       #endif
```

In another example, the adjustment factor can be a function of one of the followings or their combination: QP, encoding mode (all intra, random access or low delay), encoded block size, channel type (Luma or Chrome) or slice type. We may show the relation between the base lambda and adjusted one as follows: $λ ′ = λ . g \left(QP, mode, blocksize, channel, slice\right)$ where *g*() can be any function that includes linear and any kind of non-linear functions.

This embodiment gives the following coding gain for ECM-15. We can see that with a very small increase (or decrease) in the computational complexity at the encoder or decoder, we achieve about 0.31%, 1.27% and -1.21% bitrate savings for the Y, U and V, respectively.

| | **Random Access Main 10** | | | | |
|---|---|---|---|---|---|
| | **Over ECM-15.0** | | | | |
| | Y | U | V | EncT | DecT |
| Class A1 | -0.34% | -0.59% | -0.84% | 102.4% | 97.2% |
| Class A2 | -0.11% | -1.17% | -1.02% | 99.3% | 97.4% |
| Class B | -0.49% | -1.69% | -1.47% | 101.4% | 101.7% |
| Class C | -0.22% | -1.32% | -1.32% | 102.2% | 104.6% |
| **Overall** | -0.31% | -1.27% | -1.21% | 101.4% | 100.7% |

### Third embodiment

Just modification of quantization step size has an indirect effect on RD curve's slope. Thus, finetuning of lambda can be done by just modifying the quantization step size. In this embodiment, we slightly increase or decrease the quantization step size. For instance we can apply the same quantization step size adjustment as in the first embodiment, but not to change lambda. For example, we can implement following steps in the encoder and decoder, respectively, while using *σ* = 0.05. $CQ \left[x\right] \left[y\right] = sign \left(C\left[x\right]\left[y\right]\right) * \left(\begin{matrix}abs \left(C\left[x\right]\left[y\right]\right) * \left(1/\left(1+σ\right)\right) * Scale \left[sqrt2adj\right] \left[QP % 6\right] / QM \left[x\right] \left[y\right] + \\ quantOffset\end{matrix}\right) ≫ quantShift$ $C ′ \left[x\right] \left[y\right] = \left(\begin{matrix}CQ \left[x\right] \left[y\right] * QM \left[x\right] \left[y\right] * \left(1+σ\right) * \\ invScale \left[sqrt2adj\right] \left[QP%6\right] ≪ \left(QP/6\right)\end{matrix}\right) \left.+\left(1≪\left(bdShift-1\right)\right)\right) ≫ bdShift$

Since we do not change lambda but increase the quantization step size, we have a lower rate for a given QP but a better coding gain.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the adjustments of the lambda value and/or quantization step size described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method of video encoding, comprising:
obtaining a first parameter indicative of a quantization step size corresponding to a quantization parameter of a block, said first parameter is an adjusted version of a second parameter indicative a different quantization step size corresponding to the quantization parameter of the block, wherein the second parameter is scaled to obtain the first parameter;
quantizing transform coefficients based on the first parameter to form quantized transform coefficients; and
entropy coding the quantized transform coefficients for the block.

2. The method of claim 1, further comprising:
obtaining a first Lagrange multiplier, said first Lagrange multiplier is an adjusted version of a second Lagrange multiplier, wherein the second Lagrange multiplier is scaled to obtain the first Lagrange multiplier.

3. The method of claim 2, wherein a first scaling factor S1 is used to scale the second parameter to obtain the first parameter and a second scaling factor S2 is used to scale the second Lagrange multiplier to obtain the first Lagrange multiplier, and wherein (1-S2) corresponds to twice of (S1-1).

4. The method of any one of claims 1-3, wherein the first parameter and the second parameter are based on{ 25575, 22795, 20165, 17772, 15888, 14170 } and { 26214, 23302, 20560, 18396, 16384, 14564 }, respectively, for QP%6 = 0, 1, 2, 3, 4, 5, wherein QP represents the quantization parameter.

5. The method of any one of claims 1-4, wherein the second parameter is scaled to obtain the first parameter based on one or more of the quantization parameter, encoding mode, block size, channel type and slice type of the block.

6. A method of video decoding, comprising:
obtaining a first parameter indicative of a quantization step size corresponding to a quantization parameter of a block, said first parameter is an adjusted version of a second parameter indicative a different quantization step size corresponding to the quantization parameter of the block, wherein the second parameter is scaled to obtain the first parameter;
de-quantizing transform coefficients based on the first parameter to form de-quantized transform coefficients;
inverse transforming de-quantized transform coefficients to obtain prediction residuals for the block; and
decoding the block based on the prediction residuals for the block.

7. The method of claim 6, wherein the first parameter and the second parameter are based on { 40, 45, 51, 57, 64, 72 } and { 41, 46, 52, 59, 66, 74 }, respectively, for QP%6 = 0, 1, 2, 3, 4, 5, wherein QP represents the quantization parameter.

8. The method of claim 6 or 7, wherein the second parameter is scaled to obtain the first parameter based on one or more of the quantization parameter, encoding mode, block size, channel type and slice type of the block.

9. An apparatus for video encoding, comprising one or more processors and at least one memory coupled to the one or more processors, wherein the one or more processors are configured to:
obtain a first parameter indicative of a quantization step size corresponding to a quantization parameter of a block, said first parameter is an adjusted version of a second parameter indicative a different quantization step size corresponding to the quantization parameter of the block, wherein the second parameter is scaled to obtain the first parameter;
quantize transform coefficients based on the first parameter to form quantized transform coefficients; and
entropy code the quantized transform coefficients for the block.

10. The apparatus of claim 9, wherein the one or more processors are further configured to:
obtain a first Lagrange multiplier, said first Lagrange multiplier is an adjusted version of a second Lagrange multiplier, wherein the second Lagrange multiplier is scaled to obtain the first Lagrange multiplier.

11. The apparatus of claim 10, wherein a first scaling factor S1 is used to scale the second parameter to obtain the first parameter and a second scaling factor S2 is used to scale the second Lagrange multiplier to obtain the first Lagrange multiplier, and wherein (1-S2) corresponds to twice of (S1-1).

12. The apparatus of any one of claims 9-11, wherein the first parameter and the second parameter are based on{ 25575, 22795, 20165, 17772, 15888, 14170 } and { 26214, 23302, 20560, 18396, 16384, 14564 }, respectively, for QP%6 = 0, 1, 2, 3, 4, 5, wherein QP represents the quantization parameter.

13. An apparatus for video decoding, comprising one or more processors and at least one memory coupled to the one or more processors, wherein the one or more processors are configured to:
obtain a first parameter indicative of a quantization step size corresponding to a quantization parameter of a block, said first parameter is an adjusted version of a second parameter indicative a different quantization step size corresponding to the quantization parameter of the block, wherein the second parameter is scaled to obtain the first parameter;
de-quantize transform coefficients based on the first parameter to form de-quantized transform coefficients;
inverse transform de-quantized transform coefficients to obtain prediction residuals for the block; and
decode the block based on the prediction residuals for the block.

14. The apparatus of claim 13, wherein the first parameter and the second parameter are based on { 40, 45, 51, 57, 64, 72 } and { 41, 46, 52, 59, 66, 74 }, respectively, for QP%6 = 0, 1, 2, 3, 4, 5, wherein QP represents the quantization parameter.

15. A computer readable storage medium having stored thereon instructions for encoding or decoding a signal according to the method of any one of claims 1-8.
